# FASCICULE DE BREVET EUROPEEN

(11) **EP 1 764 234 B1**
(45) Date de publication et mention de la délivrance du brevet: **20.06.2012**
(21) Numéro de dépôt: 06019410.7
(22) Date de dépôt: 15.09.2006
(51) Int. Cl.: B60B 1/04, B60B 5/02

(54) **Procédé de fabrication d'une roue en matière composite et roue fabriquée selon le procédé**
Herstellverfahren für ein Rad aus Verbundwerkstoff und Rad aus Verbundwerkstoff
Production method for a wheel made of composite material and wheel made of composite material

(30) Priorité: 16.09.2005 FR 0509501
(43) Date de publication de la demande: 21.03.2007
(73) Titulaire: MAVIC S.A.S., 74370 Metz-Tessy (FR)
(72) Inventeur: Mercat, Jean-Pierre, 74650 Chavanod (FR); Righini, Claude, 74290 Veyrier du Lac (FR); Saillet, Benoît, 73410 Albens (FR)

(56) Documents cités:
- US-A- 3 977 453
- US-A- 5 064 250
- US-A- 5 540 485
- US-A- 5 707 114

## Description

L'invention concerne un procédé de fabrication d'une roue en matière composite pour un vélo, ainsi qu'une roue fabriquée selon le procédé de l'invention.

De façon connue, l'utilisation d'une matière composite pour réaliser des composants de vélo permet de gagner du poids par rapport au métal. D'une part une matière composite telle que des fibres de carbone a un module spécifique qui est plus élevé qu'un métal tel que l'aluminium pour les jantes ou l'inox pour les rayons. En outre une matière composite a une meilleure résistance à la fatigue que le métal.

Ainsi il est connu de réaliser une jante pour roue de vélo en matière composite. Les demandes de brevet FR2460195, FR2672251, FR2713543, EP1231077 décrivent de telles jantes. Pour réaliser le caisson de la jante il est proposé tantôt un noyau sur lequel on dispose les nappes de composite enduites de résine, tantôt une vessie gonflable que l'on dispose à l'intérieur du moule et que l'on gonfle.

On connaît également des rayons réalisés en matière composite, les demandes de brevet W09113771, FR2784622, US6036281, décrivent de tels rayons.

Pour ce qui concerne les roues complètes réalisées en matière composite, la demande de brevet FR2701899 décrit une roue à bâtons qui est réalisée par moulage.

Selon le brevet US5104199, la roue est réalisée à partir de deux moitiés de roue. Chacune des moitiés comprend une portion de jante et une nappe de rayons avec une portion centrale d'assemblage sur le moyeu. Ces éléments sont réalisés d'un seul tenant. A l'assemblage les deux moitiés de roue sont jointes. Les portions centrales des rayons sont montées sur un corps de moyeu et elles sont maintenues écartées à l'aide de deux rondelles élastiques de blocage qui sont engagées dans une gorge. L'écartement des rondelles permet de mettre les rayons sous tension, ce qui donne à la roue sa rigidité.

Dans le même ordre d'idées le brevet US5707114, lequel représente l'état de la technique le plus proche selon le préambule de la revendication 1, en relation avec la figure 24 propose de forcer l'écartement des portions centrales pour permettre l'engagement d'une entretoise tubulaire au centre de la roue.

Ces modes de construction sont avantageux car les roues obtenues sont très légères du fait de l'absence de pièces qui permettent d'ajuster la tension des rayons. Cependant les tolérances de fabrication sont très étroites si on veut qu'en final la roue ait des tolérances acceptables de voile et de circularité. En outre il est difficile de cette manière d'atteindre une tension élevée dans les rayons qui donne une bonne rigidité à la roue.

Compte tenu de cet art antérieur il existe un besoin pour un procédé de fabrication qui présente des tolérances plus larges et donc qui est plus facile à mettre en oeuvre.

Un autre but de l'invention est de proposer un mode de construction qui permet d'induire des tensions élevées dans les rayons.

Conformément au procédé de fabrication d'une roue à rayons de l'invention, la roue comprend une jante, des rayons et un moyeu central, au moins la jante et les rayons étant en matériau composite, les rayons étant répartis selon deux nappes, la jante ayant un axe de révolution, le moyeu ayant un corps de moyeu avec une portion tubulaire. Le procédé est caractérisé par le fait qu'il comprend les étapes d'assemblage des rayons d'une nappe à un flasque monté sans jeu radial sur 1e corps de moyeu, d'assemblage des rayons de la seconde nappe à un flasque monté de façon mobile le long du corps de moyeu avec un jeu radial, d'écartement relatif des deux flasques d'assemblage de rayons, d'ajustement du jeu radial du flasque mobile et d'assemblage du flasque mobile à la portion tubulaire du corps de moyeu.

La roue à rayons comprend une jante, des rayons et un moyeu central, au moins la jante et les rayons étant en matériau composite, le moyeu ayant un corps de moyeu avec une portion tubulaire. La roue est caractérisée par le fait que chaque nappe de rayons est assemblée à un flasque, qu'un des flasques est monté avec un jeu radial sur la portion tubulaire du corps de moyeu.

Selon une caractéristique additionnelle on écarte l'un de l'autre les flasques d'assemblage pour faire coïncider le plan médian de la jante avec le plan médian du moyeu.

Selon une autre caractéristique de l'invention, la jante a une section asymétrique, ce qui permet d'induire une tension plus importante dans les rayons. Le procédé selon l'invention permet d'obtenir des tensions élevées dans les rayons, même en l'absence de moyens de réglage de tension individuels pour ceux-ci.

L'invention sera mieux comprise en se référant à la description ci-dessous et aux dessins en annexe qui lui sont attachés.
La figure 1 montre une vue générale d'une roue selon un premier mode de mise en oeuvre de l'invention.
La figure 2 montre une section préférée de la jante pour une roue arrière.
La figure 3 représente un double rayon selon un mode préféré de mise en oeuvre de l'invention.
La figure 4 illustre l'assemblage de la nappe de rayons située du côté de la roue libre.
La figure 5 illustre de la même façon l'assemblage de la nappe de rayons du côté opposé à la roue libre.
Les figures 6 et 7 sont des figures explicatives de la phase d'assemblage des nappes de rayons à la jante.
La figure 8 illustre schématiquement la phase de mise sous tension des rayons.
La figure 9 représente la roue de la figure 7 après mise sous tension des rayons.

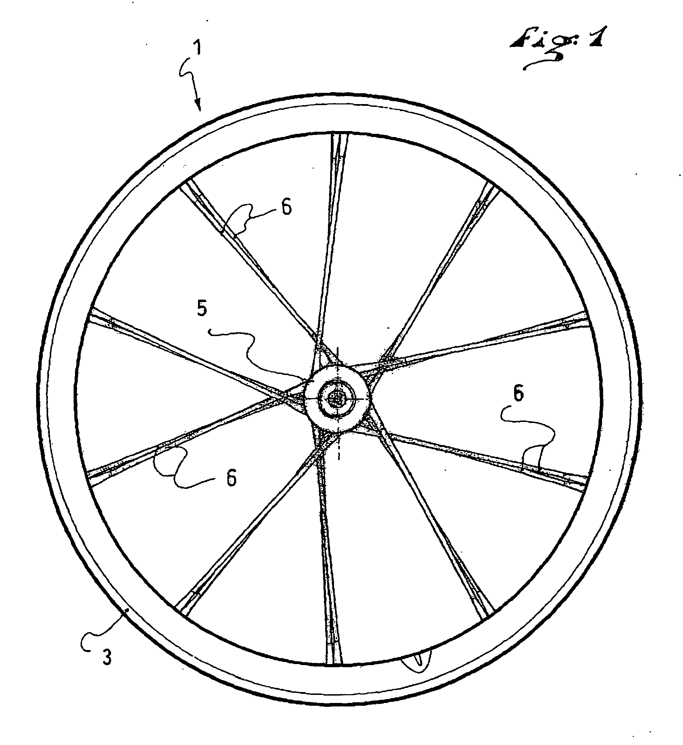

La figure 1 représente en vue de côté une roue 1. De façon classique la roue comprend une jante périphérique 3, un moyeu central 5 et des rayons de liaison 6 entre la jante et le moyeu. La roue qui est représentée est une roue arrière, toutefois ceci n'est pas limitatif et l'invention s'applique également à une roue avant.

La roue représentée comprend vingt rayons répartis en deux nappes de dix rayons chacune. Le nombre de rayons n'est pas non plus limitatif vis-à-vis de l'invention.

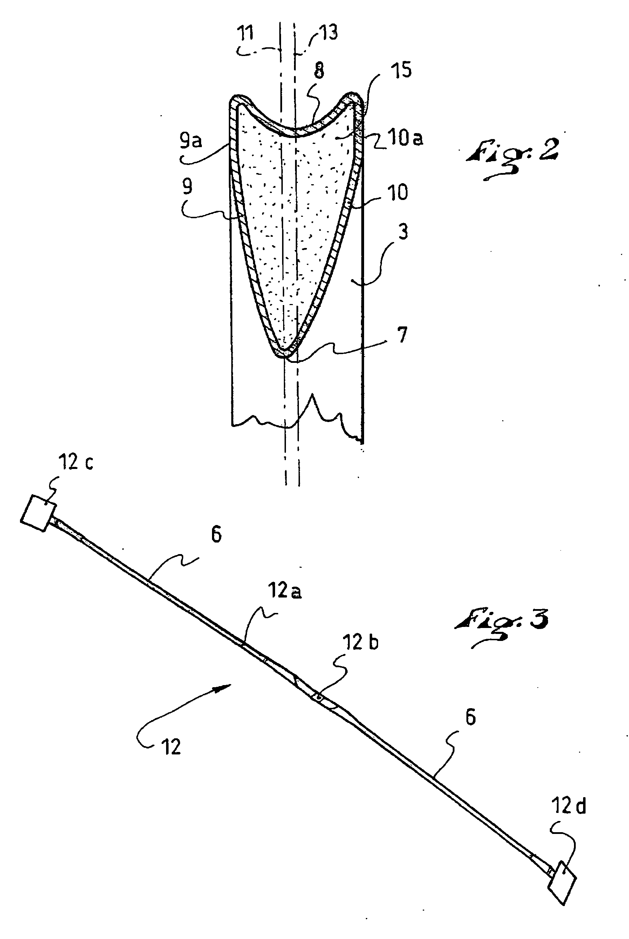

La jante 3 est représentée en section en figure 2. Comme on peut le voir dans cette figure la jante a une section effilée, une hauteur de section dans le plan de la figure 2 de l'ordre du double de la largeur. De façon classique la jante comprend une base 7, un pont supérieur 8 et des parois 9 et 10 de liaison. Les parties supérieures de ces parois sont parallèles et fournissent deux surfaces de freinage 9a et 10a.

La jante représentée est prévue pour recevoir un boyau. Ce n'est pas limitatif et la jante pourrait avoir dans sa partie supérieure un canal de réception du pneu formé par le prolongement des parois de liaison.

La jante représentée dans la figure 2 a une section asymétrique, c'est-à-dire que le plan médian d'accrochage des rayons que l'on a schématisé par le trait mixte 11 est déporté axialement par rapport au plan médian de la jante que l'on a schématisé par le trait mixte 13. Cette disposition est préférée pour une roue arrière et la raison sera expliquée ultérieurement. Une section asymétrique est préférée mais une section symétrique peut aussi convenir pour une roue arrière. Une roue avant aurait également une section symétrique.

La jante 3 est réalisée en matière composite, par exemple en fibres de carbone noyées dans une matrice de résine époxy ou polyester.

Tout mode de fabrication approprié convient pour réaliser la jante 3. Par exemple la paroi de la jante est formée sur un noyau 15 en matériau léger. Il s'agit par exemple d'une mousse acrylique qui a été préparée par usinage ou par cintrage à chaud. La paroi de la jante comprend plusieurs nappes de fibres de carbone qui sont imprégnées de résine. On peut utiliser des nappes qui sont pré imprégnées de résine ou procéder par voie humide c'est-à-dire imprégner les nappes de résine après leur mise en place autour du noyau. L'ensemble est placé ensuite dans un moule de cuisson qui est porté à une température de l'ordre de 130 degrés C pour réaliser la cuisson de la résine.

En variante à la place du noyau on pourrait utiliser une vessie gonflable comme cela est par ailleurs connu.

Selon le mode de réalisation représenté, on réalise par ailleurs les rayons 6. Les rayons sont réalisés en une matière composite et de préférence ils sont fabriqués par paires de deux rayons qui forment en continu un double rayon 12 et qui sont reliés bout à bout. Par exemple les rayons sont réalisés à partir de mèches de fibres de carbone qui sont enduites de résine et qui sont placées dans un moule de mise en forme. Le moule de mise en forme donne à chacune des portions du double rayon la forme et l'orientation que la portion aura dans l'espace une fois la roue assemblée. En particulier les différentes portions du double rayon forment entre elles des angles qui sont déterminés en fonction de l'angle de parapluie de la nappe, c'est-à-dire l'angle d'ouverture de l'enveloppe tronconique définie par une nappe de rayons et la disposition des rayons à l'intérieur de la nappe. Le mode de rayonnage de la roue est ici un mode de rayonnage tangent, c'est-à-dire que les rayons sont tangents par rapport au moyeu. Mais on pourrait avoir également un mode de rayonnage radial. Les rayons sont assemblés à la jante sans moyens de réglage de tension individuels.

La figure 3 représente un double rayon 18 tel qu'il est fabriqué. Il comprend une portion principale filiforme 12a avec une zone centrale aplatie 12b. Cette zone centrale servira à retenir le double rayon au niveau du moyeu.

A chacune des extrémités du corps 12a le double rayon porte des plaquettes d'ancrage 12c, 12d qui sont rapportées ou qui peuvent faire partie intégrante du double rayon. De préférence ces plaquettes sont réalisées en même temps que le double rayon. C'est-à-dire que la polymérisation de la résine des plaquettes et du corps se fait au même moment en même temps que l'assemblage entre la plaquette et le rayon.

La fonction des plaquettes est d'améliorer l'assemblage entre le double rayon et la jante en augmentant la surface de contact entre ces deux éléments.

D'autres modes de construction pourraient aussi convenir.

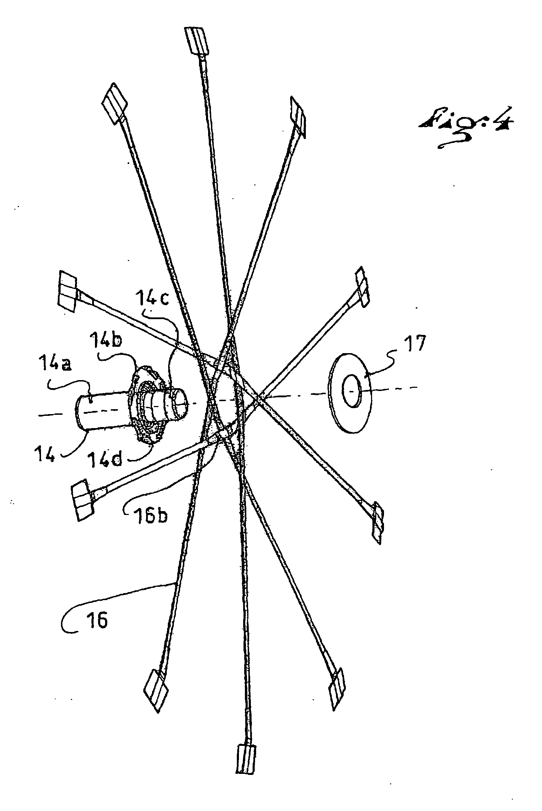

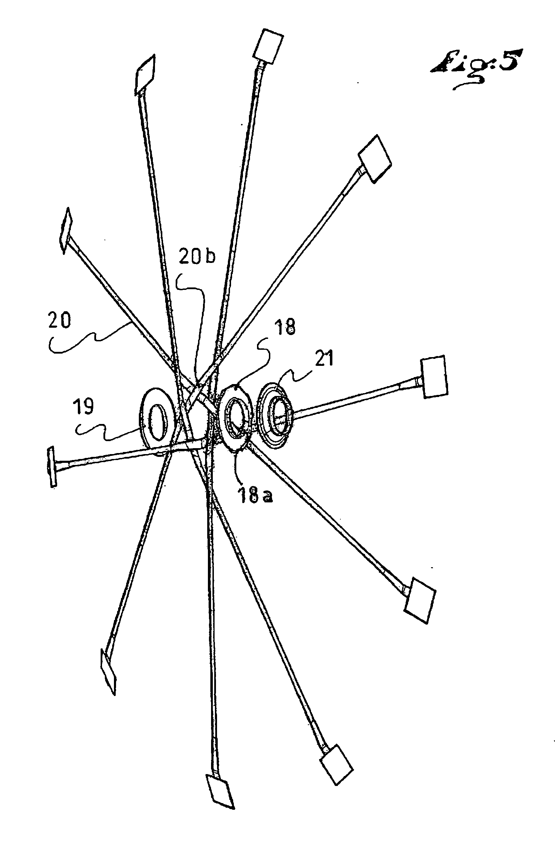

Dans l'étape suivante on forme les nappes de rayons. Les figures 4 et 5 illustrent cette opération respectivement pour la nappe de rayons du côté de la roue libre et la nappe de rayons du côté opposé.

Ainsi la figure 4 montre le corps de moyeu 14. Ce corps de moyeu comprend une portion principale tubulaire 14a, un flasque radial 14b de support des doubles rayons solidaires du moyeu et un embout 14c qui est prévu pour recevoir le mécanisme de roue libre. Le corps de roue libre est réalisé en tout matériau approprié, par exemple il est réalisé en aluminium par usinage. A l'intérieur de la portion principale tubulaire 14a et de l'embout 14c il y a des logements pour les roulements et les cliquets de roue libre. Tout mécanisme de roue libre approprié convient, notamment celui qui est décrit dans la demande de brevet FR2724431. Ce mécanisme est connu et ne sera pas décrit plus en détails. D'autres mécanismes connus pourraient aussi convenir.

Le flasque 14b présente du côté extérieur, c'est-à-dire du côté de l'embout 14c, une face 14d aménagée avec des couloirs usinés autour de l'embout 14c pour recevoir les zones centrales aplaties 16b des doubles rayons 16.

En variante le flasque 14b pourrait être rapporté sur le corps de moyeu et solidarisé au corps de moyeu par tout moyen approprié, collage, soudure ou autre. Dans tous les cas on détermine avant montage l'emplacement optimum du flasque 14b sur le moyeu de façon que celui-ci soit le plus près possible de la roue libre tout en garantissant le passage des rayons par rapport aux pignons.

Pour le montage de la nappe, cinq doubles rayons 16 sont disposés en étoile pour former dix branches qui seront dix rayons. Les doubles rayons sont croisés au niveau de leur zone aplatie de façon à laisser au centre de la nappe un passage pour l'embout 14c. Les doubles rayons sont appliqués contre la face 14d du flasque et ils sont assemblés par tout moyen approprié par exemple par collage au moyen d'une colle époxy. De préférence, la face aménagée 14d et les zones centrales aplaties 16b des rayons sont couvertes par une rondelle 17 qui est aussi assemblée par collage.

De préférence cette opération d'assemblage de la nappe au corps de moyeu se déroule dans un moule ou sur un posage qui supporte à la fois le corps de moyeu et les rayons et qui de ce fait garantit que les rayons sont bien orientés relativement à l'axe du moyeu.

La figure 5 illustre le montage de l'autre nappe. Comme dans le cas précédent les doubles rayons sont assemblés à un flasque 18 qui présente des couloirs aménagés pour recevoir la zone centrale des doubles rayons. Le flasque 18 présente un logement central circulaire 18a dont le diamètre est supérieur au diamètre de la portion principale tubulaire 14a du corps de moyeu 14. De cette façon le flasque peut être engagé avec jeu sur la portion 14a. A titre indicatif le jeu au diamètre est de l'ordre de 1 millimètre. Ce jeu est supérieur à un jeu fonctionnel courant et lorsqu'il est reporté au niveau de la jante il est susceptible d'induire un débattement important de la jante.

Le flasque 18 est réalisé en tout matériau approprié, notamment il est réalisé en aluminium par usinage.

Comme dans le cas précédent les doubles rayons 20 sont assemblés au flasque 18 par tout moyen approprié, et notamment par collage. De façon optionnelle la face aménagée du flasque et les zones centrales 20b des doubles rayons 20 sont couvertes par une rondelle 19. Une coupelle 21 peut également être prévue pour fournir une surface de collage additionnelle et épauler le flasque 18 vers l'intérieur du moyeu.

Comme précédemment, de préférence l'assemblage de la nappe est réalisé dans un moule ou sur un posage pour garantir une bonne mise en place et l'orientation relative des différents éléments.

On peut remarquer que les doubles rayons 20 de la figure 5 sont un peu plus longs que les doubles rayons 16 de la figure 4, et que par rapport à ces rayons 16 ils forment entre eux un angle plus petit au niveau du flasque 18. En outre la section des doubles rayons 20 est plus réduite que celle des doubles rayons 16.

Les doubles rayons de la figure 4 sont pratiquement orientés dans un plan perpendiculaire à l'axe du moyeu.

Ceci vient du fait que la roue est une roue arrière, de ce fait les nappes ont des angles de parapluie différents avec un parapluie plus ouvert du côté de 1a roue libre et donc des efforts plus intenses dans les rayons.

Pour une roue avant on aurait des doubles rayons de même longueur et des angles de parapluie identiques. L'assemblage des nappes pour une roue avant serait réalisé selon le même principe. Une première nappe serait assemblée à un flasque solidaire du corps de moyeu et une seconde à un flasque qui peut être engagé avec jeu sur la portion tubulaire du corps de moyeu.

Dans l'étape suivante de la construction de la roue les nappes de rayon sont assemblées à la jante. Pour réaliser cette étape les deux nappes de rayons sont placées en vis-à-vis de chaque côté de la jante, et les plaquettes d'ancrage aux extrémités des rayons sont collées contre les parois latérales de la jante.

De préférence les rayons sont associés par paires, c'est-à-dire qu'on a côte à côte au niveau de 1a jante deux rayons qui appartiennent à des nappes différentes.

Au cours de cette étape de fabrication on peut prévoir de recouvrir la jante et les plaquettes avec une nappe de fibres enduites de résine dans le but d'améliorer encore l'encastrement des plaquettes.

Cette étape de fabrication peut être réalisée dans un moule ou sur un posage.

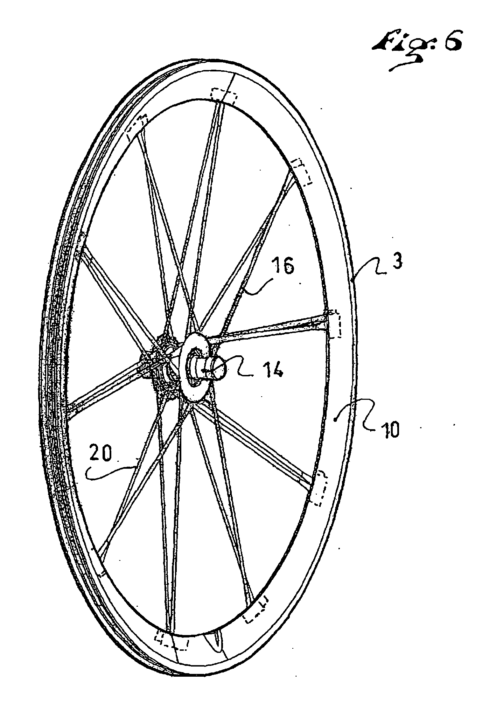

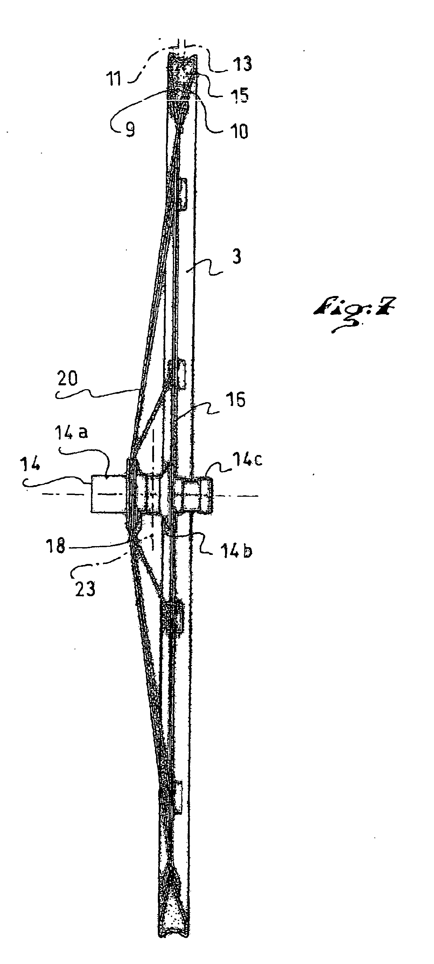

Les figures 6 et 7 illustrent le résultat de cette étape du montage de la roue. Les rayons 16 et 20 des deux nappes sont assemblés à la jante par collage de leur plaquette d'accrochage respective contre les parois latérales 9 et 10 de la jante. La présence des plaquettes d'accrochage permet d'augmenter la surface de contact et donc la surface de collage entre les rayons et la jante. On sait en effet qu'un collage entre deux éléments réalisé en reprise est moins résistant qu'un assemblage réalisé au moment de la polymérisation des éléments en question. De préférence, pour améliorer les conditions de travail de la liaison entre les rayons et la jante, les rayons des deux nappes sont croisés au niveau de la jante, c'est-à-dire que la plaquette d'un rayon 16 situé du côté de la roue libre est collée contre la paroi 9 située du côté opposé à la roue libre, et inversement pour un rayon 20. De cette façon le collage entre les plaquettes est sollicité dans le sens d'un cisaillement et non dans le sens d'un arrachement.

En ce qui concerne l'asymétrie du profil de la jante qui a été évoqué précédemment, la jante est orientée de telle façon que le plan médian d'accrochage des rayons 11 se trouve du côté opposé à la roue libre, relativement au plan médian 13 de la jante.

Pour une roue avant toutefois cette question ne se pose pas car la section de la jante est symétrique à moins que la roue soit équipée d'un disque de freinage.

Au niveau du moyeu, le flasque 18 auquel sont assemblés les doubles rayons 20 peut coulisser le long de la portion principale tubulaire 14a du corps de moyeu 14, et avec un jeu radial.

A l'issue de cette étape de fabrication, les rayons sont détendus et il convient de remarquer qu'ils sont dépourvus de moyen individuel de réglage de tension.

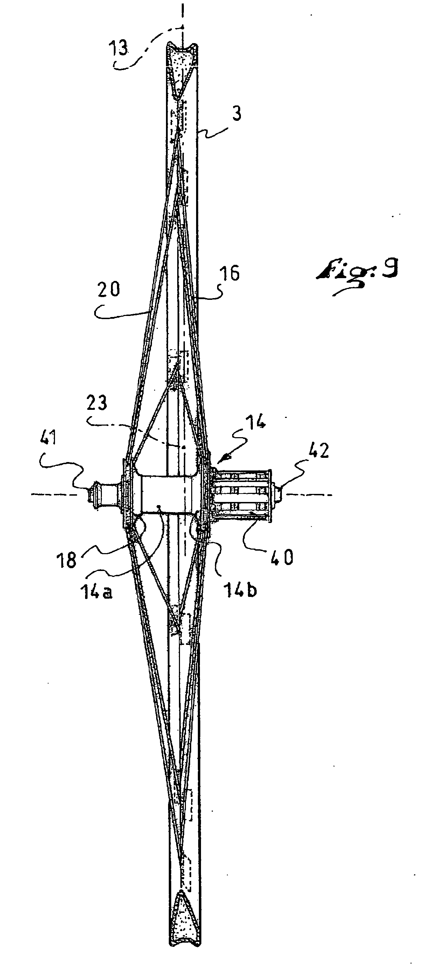

L'étape suivante de montage de la roue consiste à mettre les rayons sous tension par écartement relatif des flasques et à faire correspondre l'axe de révolution de la jante avec l'axe du corps de moyeu. Pour cela on prend pour référence la jante et son plan médian 13 et on ajuste la position du flasque 18 de façon axiale et radiale jusqu'à ce que le plan médian 13 de la jante coïncide avec le plan médian du moyeu que l'on a schématisé par le trait mixte 23. Ce plan 23 est le plan médian du moyeu complet avec tous ses éléments assemblés tel qu'illustré sur la figure 9. En d'autres termes on écarte les deux flasques 14, 18 l'un de l'autre jusqu'à ce que le plan médian du moyeu 5 vienne en coïncidence avec le plan médian 13 de la jante 3 et on aligne l'axe du moyeu 5 avec l'axe de révolution de la jante 3 en déplaçant la portion tubulaire 14a du corps de moyeu 14 relativement au flasque mobile 18 selon une direction radiale.

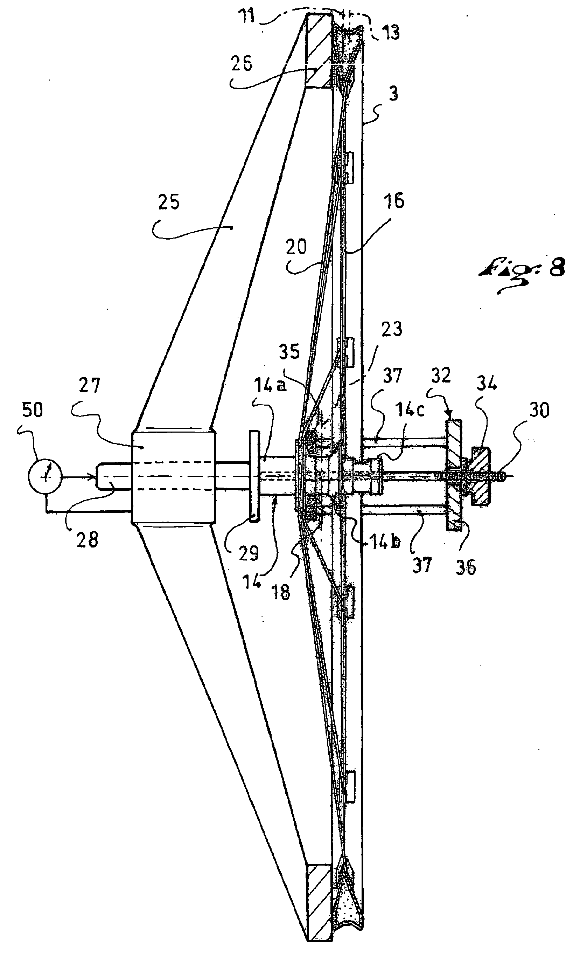

La figure 8 illustre l'opération de mise sous tension.

La roue est placée sur un bâti 25 qui présente un berceau circulaire 26 prévu pour supporter la jante 3 et un fourreau de guidage 27 orienté perpendiculairement au plan défini par l'anneau circulaire. Le berceau 26 peut être remplacé par trois points d'appui, éventuellement démultipliés par des palonniers. Une broche 28 est guidée en coulissement dans le fourreau, de préférence sans frottement, par exemple par douille à bille précontrainte sans jeu.

La roue repose par sa jante 3 sur le bâti 25. La broche 28 traverse le corps de moyeu 14. Un plateau 29 solidaire de la broche 28 fournit un support à l'extrémité du moyeu située du côté opposé à la roue libre. Au-delà du plateau la broche traverse le moyeu et se prolonge par une extrémité filetée 30.

Un écarteur 32 est monté entre l'extrémité filetée de la broche et le flasque mobile 18. L'écarteur comprend un croissant d'appui 35 qui repose sur le flasque 18 en étant enfilé sur la portion tubulaire 14a du corps de moyeu 14. Le croissant 35 est relié à une plaque de pression 36 par des entretoises 37. Un moyen de serrage formé par exemple par un écrou 34 vissé à l'extrémité filetée 30 de la broche 28 force le croissant 35 à se rapprocher du plateau 29.

La jante est en équilibre axial entre les deux nappes de rayons 16, 20 et elle trouve d'elle-même son équilibre géométrique entre les deux flasques 14b et 18.

Comme la jante est immobilisée sur son berceau 26, l'écarteur 32 force le flasque 18 à se rapprocher de l'extrémité opposée à l'embout 14c du corps de moyeu 14, et par réaction le flasque 14b qui se trouvait aligné dans le plan médian d'accrochage des rayons est forcé de se déplacer dans la direction opposée, c'est-à-dire en direction de l'écrou 34 entraînant avec lui le moyeu 14. L'écrou 34 est serré jusqu'à ce que le plan médian 23 du moyeu coïncide avec le plan médian 13 de la jante.

La broche 28 est guidée par le bâti selon une direction perpendiculaire au plan défini par le berceau 26 de support de la jante. De ce fait le jeu radial entre le flasque 18 et la portion tubulaire 14a du moyeu permet d'ajuster l'alignement de l'axe du corps de moyeu avec la direction de guidage de la broche. On peut prévoir pour la broche 28 un jeu radial à la traversée de la plaque de pression 36 ou tout autre dispositif approprié pour faciliter cet alignement.

Le déplacement des deux flasques du moyeu relativement à la jante provoque la mise sous tension des rayons 16, 20 des deux nappes.

Le contrôle de la position relative des plans médians et de l'alignement de l'axe du corps de moyeu avec l'axe de révolution de la jante peut être réalisé par tout moyen approprié, et par exemple au moyen d'un comparateur 50 disposé entre le bâti 25 et la broche 28.

Un fois que les différents éléments sont en place on assemble le flasque 18 à la portion tubulaire 14a du corps de moyeu par tout moyen approprié, et notamment au moyen d'une colle époxy. En d'autres termes une fois que les différents éléments sont en place, le jeu radial entre le flasque 18 monté avec jeu et la portion tubulaire 14a du corps de moyeu 14 est comblé avec de la colle d'assemblage.

La figure 9 montre la roue un fois terminée. Pour des raisons de clarté la roue est représentée en section partielle. Le moyeu complet est représenté avec son corps de roue libre 40 et les embouts 41, 42 de montage dans la fourche. La figure 9 montre la coïncidence entre le plan médian 13 de la jante et le plan médian 23 du moyeu. Egalement on peut voir que la nappe de rayons 16 du côté roue libre est plus ouverte que la nappe de rayons 20 du côté opposé à la roue libre.

On notera que l'asymétrie de la jante en section joue dans le sens d'une augmentation de l'écart initial entre le plan médian 13 de la jante et le plan médian 23 du moyeu. De ce fait pour que les deux plans coïncident il est nécessaire de serrer l'écrou 34 davantage et donc de tendre les rayons davantage pour atteindre la coïncidence entre les deux plans médians.

Ceci est avantageux principalement pour une roue arrière où du fait de la roue libre et des pignons la nappe de rayons du côté roue libre est plus ouverte que l'autre nappe.

Pour une roue arrière traditionnelle il existe un déport de 17 millimètres environ entre le flasque d'accrochage des rayons et le plan médian de la jante. Or pour une roue à rayons en carbone cette distance n'est pas suffisante pour atteindre une tension suffisante dans les rayons. Avec l'asymétrie de la jante cette distance peut être augmentée de 2 à 3 millimètres.

On estime qu'il est possible de cette façon d'augmenter de 40% environ 1a tension des rayons du côté de la roue libre et de 70% la tension du côté opposé.

Ceci permet donc de gagner en tension et donc d'améliorer la rigidité de la roue. Pour une roue avant on procéderait de la même façon, sauf qu'en principe les deux nappes de rayons sont semblables et que la jante est symétrique en section. Néanmoins le fait qu'un des flasques soit monté sur le corps de moyeu avec une possibilité de déplacement axial et un jeu radial permet d'ajuster la coïncidence entre les plans médians de la jante et de la roue en faisant correspondre également l'axe du corps de moyeu avec l'axe de révolution de la jante.

Naturellement la présente description n'est donnée qu'à titre indicatif et l'on pourrait adopter d'autres mises en oeuvre de l'invention sans pour autant sortir du cadre de celle-ci.

En particulier pour la roue arrière qui a été décrite le flasque de référence 14b était le flasque situé du côté de la roue libre. Cette solution est préférée dans la mesure où la roue libre est l'organe moteur de la roue et où on optimise ainsi la position du flasque par rapport à la roue libre, aux pignons et au dérailleur. La position de l'autre flasque est un peu imprécise car elle dépend de la rigidité des rayons en traction et de la rigidité de la jante. Il est donc intéressant d'avoir le flasque du côté roue libre monté fixe sur le moyeu le plus près possible de la roue libre. Toutefois ce n'est pas limitatif et on pourrait prendre comme référence le flasque situé du côté opposé à la roue libre et déplacer le flasque situé du côté de la roue libre pour induire la tension dans les rayons.

Les flasques d'assemblage des rayons au moyeu pourraient avoir d'autres formes que des disques notamment une forme de bulbe.

Les flasques d'assemblage pourraient être montés tous les deux mobiles sur le corps de moyeu, l'un sans jeu radial et l'autre avec jeu radial.

Dans ce cas la position des deux flasques est ajustée sur le corps de moyeu, d'une part pour ajuster l'écartement des flasques, d'autre part pour ajuster la position des flasques de façon que les plans médians de la jante et du moyeu coïncident, enfin pour aligner l'axe du moyeu et l'axe de la jante.

Ensuite les deux flasques sont collés au corps de moyeu. Au lieu de réaliser les nappes de rayons à partir de doubles rayons qui se croisent, on pourrait réaliser la nappe d'une seule pièce avec une portion centrale prévue pour être assemblée au flasque.

Au lieu de réaliser la jante d'un côté et les rayons d'un autre côté, on pourrait réaliser deux sous-ensembles comprenant chacun une demie jante avec une nappe de rayons, chaque sous-ensemble étant d'un seul tenant, puis assembler entre eux les deux sous-ensembles au niveau de la jante et au niveau du moyeu, l'une des nappes étant assemblée sur un flasque fixe sur le moyeu et l'autre étant monté de façon mobile. Le procédé de fabrication décrit ci-avant est particulièrement intéressant pour le montage d'une roue dont les rayons sont dépourvus de moyens de réglage individuels, il peut également être envisagé pour une roue dont au moins l'une des deux nappes de rayons est pourvue de moyens de réglage individuels.

## Revendications

1. Procédé de fabrication d'une roue à rayons, la roue comprenant une jante (3), des rayons (6, 16, 20) et un moyeu central (5), au moins la jante (3) et les rayons (6, 12, 16 20) étant en matériau composite, les rayons étant répartis selon deux nappes, la jante (3) ayant un axe de révolution, le moyeu (5) ayant un corps de moyeu (14) avec une portion tubulaire(14a), **caractérisé par le fait qu'**il comprend les étapes d'assemblage des rayons (16) d'une nappe à un flasque (14b) monté sans jeu radial sur le moyeu, d'assemblage des rayons (20) de la seconde nappe à un flasque (18) monté de façon mobile avec un jeu radial le long de la portion tubulaire (14a) du corps de moyeu (14), d'écartement relatif des deux flasques d'assemblage de rayons (14, 18), d'ajustement du jeu radial du flasque mobile (18) et d'assemblage du flasque mobile (18) à la portion tubulaire (14a) du corps de moyeu (14).

2. Procédé selon la revendication 1, **caractérisé par le fait que** le flasque (14b) monté sans jeu radial est assemblé solidairement au corps de moyeu (14) et que l'autre flasque (18) est monté sur la portion tubulaire (14a) du corps de moyeu (14) avec un jeu radial.

3. Procédé selon la revendication 1 **caractérisé par le fait qu'**on écarte les deux flasques (14, 18) l'un de l'autre jusqu'à ce que le plan médian du moyeu (5) vienne en coïncidence avec le plan médian (13) de la jante (3).

4. Procédé selon la revendication 1, **caractérisé par le fait qu'**on aligne l'axe du moyeu (5) avec l'axe de révolution de la jante (3) en déplaçant la portion tubulaire (14a) du corps de moyeu (14) relativement au flasque mobile (18) selon une direction radiale.

5. Procédé selon l'une quelconque des revendications précédentes, **caractérisé par le fait que** le second flasque (18) est assemblé par collage à la portion tubulaire (14a) du corps de moyeu (14).

6. Procédé selon l'une quelconque des revendications précédentes, **caractérisé par le fait qu'**on assemble la roue sur un bâti (25), le bâti ayant un berceau (26) de support de la jante, un plateau mobile (29) de support du corps de moyeu (14), le plateau (29) étant guidé par rapport au bâti (25) selon une direction alignée avec l'axe de révolution de la jante.

7. Roue à rayons, **caractérisé en ce qu'**elle est obtenue à l'aide du procédé selon l'une quelconque des revendications 1 à 6.

8. Roue à rayons selon la revendication 7, la roue comprenant une jante (3), des rayons (6, 12, 16, 20) et un moyeu central (5), au moins la jante (3) et les rayons (6, 12, 16, 20) étant en matériau composite, les rayons étant répartis selon deux nappes, le moyeu ayant un corps de moyeu (14) avec une portion tubulaire (14a), **caractérisée par le fait que** chaque nappe de rayons est assemblée à un flasque (14b, 18), qu'un des flasques (18) est monté avec un jeu radial sur la portion tubulaire (14a) du corps de moyeu (14).

9. Roue selon la revendication 8, **caractérisée par le fait que** le jeu radial entre le flasque (18) monté avec jeu et la portion tubulaire (14a) du corps de moyeu (14) est comblé avec de la colle d'assemblage.

10. Roue selon la revendication 8 ou 9 où le moyeu comprend un corps de roue libre (40) sur un côté, **caractérisée par le fait que** le flasque (18) monté avec jeu est situé sur le corps de moyeu du côté opposé à la roue libre.

11. Roue selon la revendication 10, **caractérisée par le fait que** la jante (3) est asymétrique en section.

12. Roue selon l'une des revendications 7 à 11, **caractérisé en ce que** les rayons sont dépourvus de moyens de réglage de tension individuels.

## Claims

1. Method for manufacturing a spoked wheel, the wheel comprising a rim (3), spokes (6, 16, 20) and a central hub (5), at least the rim (3) and the spokes (6, 12 , 16 20) being made of composite material, the spokes being distributed in two sets, the rim (3) having an axis of revolution, the hub (5) having a hub body (14) with a tubular portion (14a), **characterized in that** it comprises the steps of assembling the spokes (16) of one set to a flange (14b) mounted without radial clearance on the hub, assembling the spokes (20) of the second set to a flange (18) movably mounted with radial clearance along the tubular portion (14a) of the hub body (14), relative spacing apart of the two spoke assembly flanges (14, 18), adjusting the radial clearance of the movable flange (18), and assembling the movable flange (18) to the tubular portion (14a) of the hub body (14).

2. Method according claim 1, **characterized in that** the flange (14b) mounted without radial clearance is affixedly assembled to the hub body (14), and **in that** the other flange (18) is mounted on the tubular portion (14a) of the hub body (14) with radial clearance.

3. Method according to claim 1, characterize in that the two flanges (14, 18) are spaced apart until the median plane of the hub (5) comes into coincidence with the median plane (13) of the rim (3).

4. Method according to claim 1, **characterized in that** the axis of the hub (5) is aligned with the axis of revolution of the rim (3) by moving the tubular portion (14a) of the hub body (14) in relation to the movable flange (18) along a radial direction.

5. Method according to any of the preceding claims, **characterized in that** the second flange (18) is assembled by gluing to the tubular portion (14a) of the hub body (14).

6. Method according to any of the preceding claims, **characterized in that** the wheel is assembled on a frame (25), the frame having a cradle (26) for supporting the rim, a movable plate (29) for supporting the hub body (14), the plate (29) being guided in rotation to the frame (25) along a direction aligned with the axis of revolution of the rim.

7. Spoked wheel, **characterized in that** it is obtained using the method according to any of claims 1 to 6.

8. Spoked wheel according to claim 7, the wheel comprising a rim (3), spokes (6, 12, 16, 20) and a central hub (5), at least the rim (3) and the spokes (6, 12 , 16, 20) being made of composite material, the spokes being distributed in two sets, the hub having a hub body (14) with a tubular portion (14a), **characterized in that** each set of spokes is assembled to a flange (14b, 18), and **in that** one of the flanges (18) is mounted with radial clearance on the tubular portion (14a) of the hub body (14).

9. Wheel according to claim 8, **characterized in that** the radial clearance between the flange (18) mounted with clearance and the tubular portion (14a) of the hub body (14) is filled with assembly glue.

10. Wheel according to claim 8 or 9, in which the hub comprises a freewheel body (40) on one side, **characterized in that** the flange (18) mounted with clearance is located on the hub body on the side opposite the freewheel.

11. Wheel according to claim 10, **characterized in that** the rim (3) is asymmetrical in cross-section.

12. Wheel according to one of claims 7 to 11, **characterized in that** the spokes arc devoid of means for adjusting individual tensions.

## Patentansprüche

1. Verfahren zum Herstellen eines Speichenrades, wobei das Rad eine Felge (3), Speichen (6, 16, 20) und eine zentrale Nabe (5) umfasst, wobei mindestens die Felge (3) und die Speichen (6, 12, 16, 20) aus einem Verbundmaterial bestehen, wobei die Speichen in zwei Lagen aufgeteilt sind, wobei die Felge (3) eine Drehachse umfasst, wobei die Nabe (5) einen Nabenkörper (14) mit einem rohrförmigen Abschnitt (14a) aufweist, **dadurch gekennzeichnet, dass** es die Schritte des Montierens der Speichen (16) einer Lage mit einem Flansch (14b), der ohne radiales Spiel auf der Nabe montiert ist, des Montierens der Speichen (20) der zweiten Lage mit einem Flansch (18), der auf bewegliche Weise mit einem radialen Spiel entlang des rohrförmigen Abschnitts (14a) des Nabenkörper (14) montiert ist, des relativen Spreizens der zwei Flansche zum Montieren der Speichen (14, 18), des Einstellens des radialen Spiels des beweglichen Flansches (18) und des Montierens des beweglichen Flansches (18) auf den rohrförmigen Abschnitt (14a) des Nabenkörpers (14) umfasst.

2. Verfahren nach Anspruch 1, **dadurch gekennzeichnet, dass** der ohne radiales Spiel montierte Flansch (14b) einstückig mit dem Nabenkörper (14) montiert ist und der andere Flansch (18) auf dem rohrförmigen Abschnitt (14a) des Nabenkörpers (14) mit einem radialen Spiel montiert ist.

3. Verfahren nach Anspruch 1, **dadurch gekennzeichnet, dass** die zwei Flansche (14, 18) von einander gespreizt werden, bis die mittlere Ebene der Nabe (5) mit der mittleren Ebene (13) der Felge (3) übereinstimmt.

4. Verfahren nach Anspruch 1, **dadurch gekennzeichnet, dass** die Achse der Nabe (5) mit der Drehachse der Felge (3) durch Verschieben des rohrförmigen Abschnitts (14a) des Nabenkörpers (14) in Bezug auf den beweglichen Flansch (18) entlang einer radialen Richtung ausgerichtet wird.

5. Verfahren nach einem der vorherigen Ansprüche, **dadurch gekennzeichnet, dass** der zweite Flansch (18) durch Kleben auf den rohrförmigen Abschnitt (14a) des Nabenkörpers (14) montiert wird.

6. Verfahren nach einem der vorherigen Ansprüche, **dadurch gekennzeichnet, dass** das Rad auf ein Gestell (25) montiert wird, wobei das Gestell eine Aufnahme (26) zur Unterstützung der Felge und eine mobile Platte (29) zur Unterstützung des Nabenkörpers (14) aufweist, wobei die Platte (29) in Bezug auf das Gestell (25) entlang einer Richtung geführt wird, die mit der Drehachse der Felge ausgerichtet ist.

7. Speichenrad, **dadurch gekennzeichnet, dass** es mittels des Verfahrens nach einem der Ansprüche 1 bis 6 hergestellt wird.

8. Speichenrad nach Anspruch 7, wobei das Rad eine Felge (3), Speichen (6, 12, 16, 20) und eine zentrale Nabe (5) umfasst, wobei zumindest die Felge (3) und die Speichen (6, 12, 16, 20) aus einem Verbundmaterial bestehen, wobei die Speichen in zwei Lagen aufgeteilt sind, wobei die Nabe einen Nabenkörper (14) mit einem rohrförmigen Abschnitt (14a) umfasst, **dadurch gekennzeichnet, dass** jede Lage von Speichen mit einem Flansch (14b, 18) montiert wird, wobei einer der Flansche (18) mit einem radialen Spiel auf den rohrförmigen Abschnitt (14a) des Nabenkörpers (14) montiert ist.

9. Rad nach Anspruch 8, **dadurch gekennzeichnet, dass** das radiale Spiel zwischen dem Flansch (18), der mit einem Spiel montiert ist, und dem rohrförmigen Abschnitt (14a) des Nabenkörpers (14) mit Montagekleber gefüllt ist.

10. Rad nach Anspruch 8 oder 9, wobei die Nabe an einer Seite einen Körper eines freien Rades (40) umfasst, **dadurch gekennzeichnet, dass** der Flansch (18), der mit einem Spiel montiert ist, auf dem Nabenkörper an der dem freien Rad entgegengesetzten Seite angeordnet ist.

11. Rad nach Anspruch 10, **dadurch gekennzeichnet, dass** die Felge (3) einen asymmetrischen Querschnitt aufweist.

12. Rad nach einem der Ansprüche 7 bis 11, **dadurch gekennzeichnet, dass** die Speichen keine individuellen Mittel zur Spannungseinstellung aufweisen.
